(19)

**Europäisches Patentamt**

**European Patent Office**

**Office européen des brevets**

(11) **EP 4 773 425 A1**

(12) **EUROPEAN PATENT APPLICATION**

(43) Date of publication:
08.07.2026 Bulletin 2026/28

(21) Application number: 25227119.2

(22) Date of filing: 23.12.2025

(51) International Patent Classification (IPC):
*H01M 50/586* (2021.01) *H01M 10/04* (2006.01)

(52) Cooperative Patent Classification (CPC):
**H01M 10/0459; H01M 50/586**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.12.2024 KR 20240196100**
**08.12.2025 KR 20250192715**

(71) Applicant: **SK On Co., Ltd.**
**Seoul 03161 (KR)**

(72) Inventors:
• **KIM, So Eun**
**34124 Daejeon (KR)**
• **YUN, Hyea Won**
**34124 Daejeon (KR)**
• **LEE, Seung Hun**
**34124 Daejeon (KR)**

(74) Representative: **Stolmár & Partner**
**Patentanwälte PartG mbB**
**Blumenstraße 17**
**80331 München (DE)**

(54) **ELECTRODE ASSEMBLY**

(57) Proposed is an electrode assembly including a positive electrode plate, a separator, and a negative electrode plate sequentially stacked, wherein the positive electrode plate may include a first side region provided with a positive electrode external-connection noncoated part for electrical connection to an external terminal or lead, a non-coated part in a predetermined portion of a second side region, opposite to the first side region, where an active material layer is not formed, a coated part between the first and second side regions, where an active material layer is formed except for the non-coated part, and a positive electrode insulation coating part formed in the first side region of the positive electrode plate, extending from a boundary between the non-coated part and the coated part toward an end of the first side region of the positive electrode plate.

EP 4 773 425 A1

## Description

CROSS REFERENCE TO RELATED APPLICATION

The present application claims priority to Korean Patent Application No. 10-2024-0196100, filed on December 24, 2024, and Korean Patent Application No. 10-2025-0192715, filed on December 8, 2025, the entire contents of each of which are incorporated herein by reference for all purposes.

BACKGROUND

Technical Field

The present disclosure relates to an electrode assembly.

Description of the Related Art

In general, a secondary battery is a battery that can be used repeatedly through the process of discharging that converts chemical energy into electrical energy and charging during which the chemical reactions are reversed. Various types of secondary batteries continue to be developed, such as nickel-cadmium (Ni-Cd) batteries, nickel-hydrogen (Ni-MH) batteries, lithium-metal batteries, lithium-ion (Li-Ion) batteries, and lithium-ion polymer batteries (hereinafter referred to as "LIPB").

Recently, secondary batteries have been attracting attention as a popular energy source as they are widely used in IT products, automobiles, and energy storage fields. In the field of IT products, secondary batteries are required to be able to be used continuously and for long stretches of time, and miniaturization and weight reduction are also important, while the automotive field requires high power, durability, and stability to eliminate explosion risks. In the energy storage field, secondary batteries are used for storing excess power produced by wind and solar generation, etc., and since a battery is used in a fixed manner, more relaxed conditions may be applied.

For such secondary batteries, various manufacturing methods and electrode assembly structures are being developed to enhance energy efficiency, energy density, and electrical stability.

Document of Related Art

(Patent Document 1) Korean Patent Application Publication No. 10-1997-0054735

SUMMARY

According to an aspect of the present disclosure, there is provided an electrode assembly that increases the energy density of a secondary battery by minimizing loss of the active material layer of an electrode plate during a notching process, such as tab forming of the electrode plate.

According to another aspect of the present disclosure, there is provided an electrode assembly that effectively prevents issues, such as electrical shorting of an electrode plate caused by shrinkage or deformation of a separator during stacking and bonding of the electrode plate and the separator.

An electrode assembly according to an embodiment of the present disclosure may include: a positive electrode plate, a separator, and a negative electrode plate sequentially stacked, wherein the positive electrode plate may include: a first side region provided with a positive electrode external-connection non-coated part for electrical connection to an external terminal or lead; a non-coated part in a predetermined portion of a second side region, opposite to the first side region, where an active material layer is not formed; a coated part between the first and second side regions, where an active material layer is formed except for the non-coated part; and a positive electrode insulation coating part formed in the first side region of the positive electrode plate, extending from a boundary between the non-coated part and the coated part toward an end of the first side region of the positive electrode plate.

In this case, the positive electrode insulation coating part may be formed to extend from the boundary between the non-coated part and the coated part in the second side region of the positive electrode plate toward an end of the second side region of the positive electrode plate.

In addition, the positive electrode insulation coating part may be formed on the first side region of the positive electrode plate so as to cover the boundary between the non-coated part and the coated part, including a portion of the non-coated part and a portion of the coated part simultaneously.

In addition, the positive electrode insulation coating part may be formed on the first side region of the positive electrode plate so as to extend from the boundary between the non-coated part and the coated part toward an end of the non-coated part in a first side direction of the positive electrode plate.

In addition, the positive electrode insulation coating part may be formed on the second side region of the positive electrode plate so as to cover the boundary between the non-coated part and the coated part, including a portion of the non-coated part and a portion of the coated part simultaneously.

In addition, the positive electrode insulation coating part may be formed on the second side region of the positive electrode plate so as to extend from the boundary between the non-coated part and the coated part toward an end of the non-coated part in a second side direction of the positive electrode plate.

In addition, in a second side region of the negative electrode plate, a negative electrode external-connection non-coated part may be formed for electrical connection to an external terminal or lead, and an end of the positive electrode insulation coating part provided in the first side region of the positive electrode plate may be formed to extend farther toward a first-side end of the separator than an end, in a first side direction, of the negative electrode plate stacked facing the positive electrode plate on the separator.

In addition, in a second side region of the negative electrode plate, a negative electrode external-connection non-coated part may be formed for electrical connection to an external terminal or lead, and an end of the positive electrode insulation coating part provided in a second side direction of the positive electrode plate may be formed shorter than a second-side end of the separator.

In addition, an end of the positive electrode insulation coating part provided on the second side region of the positive electrode plate may be formed inward of a second-side end of the separator.

An electrode assembly according to another embodiment of the present disclosure may include: a positive electrode plate, a separator, and a negative electrode plate sequentially stacked, wherein the positive electrode plate may include: a first side region provided with a positive electrode external-connection non-coated part for electrical connection to an external terminal or lead; a non-coated part in a predetermined portion of a second side region, opposite to the first side region, where an active material layer is not formed; a coated part between the first and second side regions, where an active material layer is formed except for the non-coated part; and a positive electrode insulation coating part formed in the first side region of the positive electrode plate, extending from a boundary between the non-coated part and the coated part toward an end of the first side region of the positive electrode plate, whereas the negative electrode plate may include: a second side region provided with a negative electrode external-connection non-coated part for electrical connection to an external terminal or lead; a non-coated part in a predetermined portion of a first side region, opposite to the second side region, where an active material layer is not formed; a coated part between the first and second side regions, where an active material layer is formed except for the non-coated part; and a negative electrode insulation coating part formed in each of the first and second side regions of the negative electrode plate, each extending from a boundary between the non-coated part and the coated part toward an end in each direction.

In this case, an end of the negative electrode insulation coating part in a first side direction of the negative electrode plate may be formed to be equal to or longer than an end of the positive electrode insulation coating part formed in a first side direction of the positive electrode plate stacked facing the negative electrode plate on the separator.

In addition, the positive electrode plate may further include a positive electrode insulation coating part formed in the second side region of the positive electrode plate, extending from the boundary between the non-coated part and the coated part toward an end of the second side region of the positive electrode plate, wherein an end of the negative electrode insulation coating part in a second side direction of the negative electrode plate may be formed to extend farther than an end of the positive electrode insulation coating part in a second side direction of the positive electrode plate stacked facing the negative electrode plate on the separator.

In addition, an end of the negative electrode insulation coating part in a first side direction of the negative electrode plate may be formed inward of a first-side end of the separator.

In addition, in the first side region of the positive electrode plate, the positive electrode insulation coating part may be formed to extend farther than an end of the negative electrode insulation coating part of the negative electrode plate corresponding thereto across the separator, and in the second side region of the positive electrode plate, a length of the positive electrode insulation coating part in a direction toward an end of the separator may be formed to extend longer than a length of the negative electrode insulation coating part in a direction toward the end of the separator.

In addition, when a length of the positive electrode insulation coating part extending in a first side direction of the positive electrode plate from the boundary between the coated part and the non-coated part is defined as A2, a distance from a first-side end of the coated part of the positive electrode plate to a first-side end of the negative electrode plate stacked facing the positive electrode plate on the separator is defined as X1, a distance from the first-side end of the negative electrode plate to a first-side end of the separator is defined as Y1, and a final thickness of a stacked body in which the positive electrode plate, the separator, and the negative electrode plate are alternately stacked is defined as T1, an equation $X1 \leq A2 \leq T1/2 + X1 + Y1$ may be satisfied.

In addition, when a length of the negative electrode insulation coating part extending in a second side direction of the negative electrode plate from the boundary between the coated part and the non-coated part toward the second side direction is defined as A', a distance from an end of the coated part in the second side direction of the negative electrode plate to a second-side end of the positive electrode plate stacked facing the negative electrode plate on the separator is defined as X', a distance from the second-side end of the positive electrode plate to a second-side end of the separator is defined as Y', and a final thickness of a stacked body in which the positive electrode plate, the separator, and the negative electrode plate are alternately stacked is defined as T1, an equation $A' \leq T1/2 + X' + Y'$ may be satisfied.

The features and advantages of the present disclosure will become more apparent from the following detailed description based on the accompanying drawings.

Prior to this, terms or words used in this specification and claims should not be construed in their usual, dictionary meaning, and should be interpreted with meaning and concept consistent with the technical idea of the present disclosure on the basis of the principle that the inventor can define terminology appropriately to explain his or her invention in the best way possible.

According to an embodiment of the present disclosure, it is possible to enhance the reliability of electrical insulation between the positive and negative electrode plates of the electrode assembly provided by the separator.

Furthermore, it is possible to effectively prevent electrical short circuits between the positive and negative electrode plates caused by electrical contact resulting from physical deformation of the separator stacked between the positive and negative electrode plates.

Furthermore, by preventing electrical short circuits at the ends of the separator during sequential stacking of the positive electrode plate, separator, and negative electrode plate, the stacking space between the positive and negative electrodes can be maximized. This enhances the overall stack flatness and effectively eliminates unnecessary space during the stacking process.

Furthermore, by eliminating unnecessary space during the stacking of the positive electrode plate, separator, and negative electrode plate, physical deformation of the pouchtype battery during the electrode assembly's degassing process can be minimized.

BRIEF DESCRIPTION OF THE DRAWINGS

The above and other objectives, features, and other advantages of the present disclosure will be more clearly understood from the following detailed description when taken in conjunction with the accompanying drawings, in which:

FIG. 1 is a schematic view showing an example of a stacking method of an electrode assembly;
FIG. 2 is a planar schematic view of a positive electrode plate of an electrode assembly according to an embodiment of the present disclosure;
FIG. 3 is a planar schematic view of an electrode assembly according to an embodiment of the present disclosure;
FIG. 4 is a planar schematic view of a positive electrode plate according to a modified example of an embodiment of the present disclosure;
FIG. 5 is a planar schematic view of a positive electrode plate according to another modified example of an embodiment of the present disclosure;
FIG. 6 is a planar schematic view of a negative electrode plate stacked on a separator according to another embodiment of the present disclosure;
FIG. 7 is a planar schematic view showing an insulation coating part formed on a positive electrode plate and on a negative electrode plate according to another embodiment of the present disclosure;
FIG. 8 is a planar schematic view showing an insulation coating formed on a positive electrode plate and on a negative electrode plate according to another embodiment of the present disclosure; and
FIG. 9 is a planar schematic view of an electrode assembly according to an embodiment of the present disclosure, showing the width dimensions of each portion.

DETAILED DESCRIPTION

Terms used to describe an embodiment of the present disclosure are not intended to limit the disclosure. It should be noted that singular expressions include plural expressions unless the context clearly dictates otherwise.

It should be noted that, in assigning reference numerals to components in the drawings, identical components are assigned the same reference numerals as much as possible even if they are shown in different drawings, and similar reference numbers are assigned to similar components.

The drawings may be schematic or exaggerated for the purpose of illustrating the embodiments. In this document, expressions such as "have", "may have", "include", or "may include" refer to the presence of the corresponding feature (e.g., a numerical value, function, operation, or component such as a part), and do not exclude the presence of additional features.

Terms such as "one", "other", "another", "first", "second", etc., are used to distinguish one component from another component, and the components are not limited by the terms.

Hereinafter, an embodiment of the present disclosure will be described in detail with reference to the attached drawings.

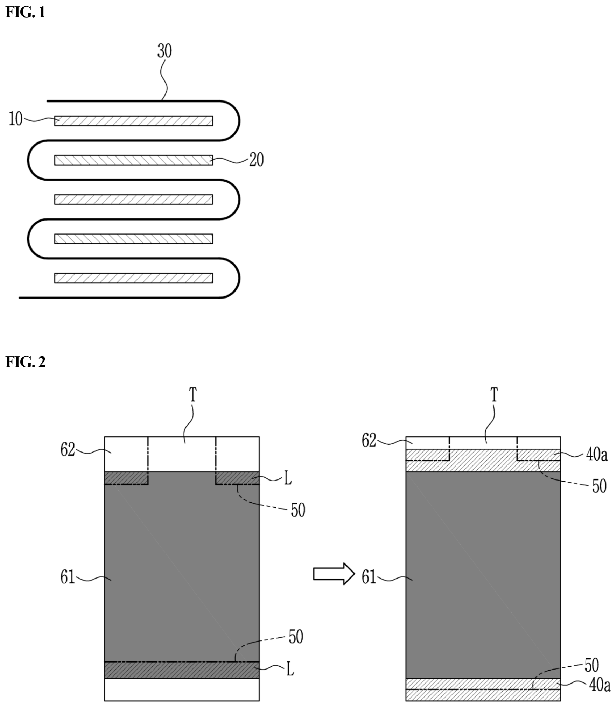

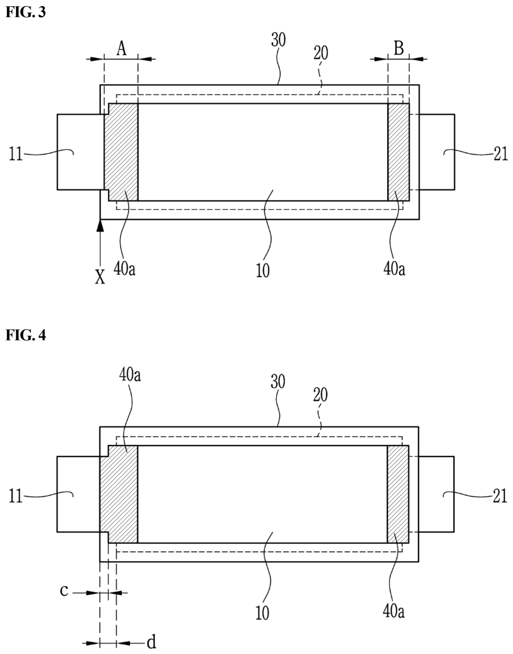

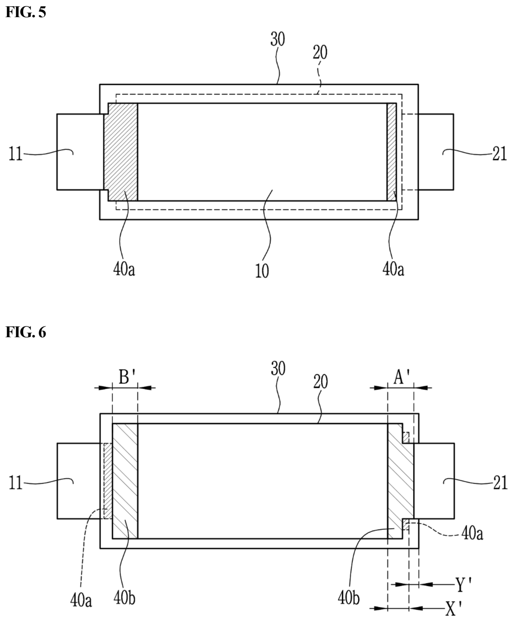

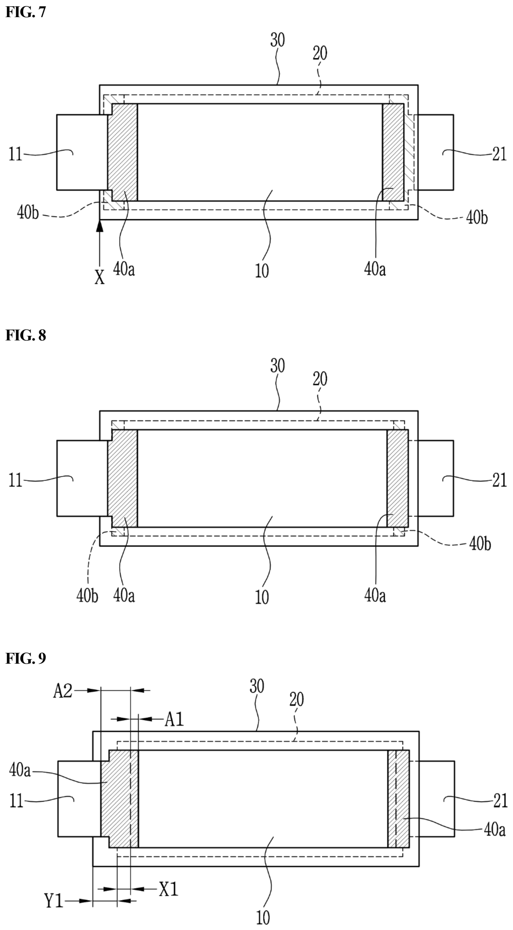

FIG. 1 is a schematic view showing an example of a stacking method of an electrode assembly; FIG. 2 is a planar schematic view of a positive electrode plate of an electrode assembly according to an embodiment of the present disclosure; FIG. 3 is a planar schematic view of an electrode assembly according to an embodiment of the present disclosure; FIG. 4 is a planar schematic view of a positive electrode plate according to a modified example of an embodiment of the present disclosure; FIG. 5 is a planar schematic view of a positive electrode plate according to another modified example of an embodiment of the present disclosure; FIG. 6 is a planar schematic view of a negative electrode plate stacked on a separator according to another embodiment of the present disclosure; FIG. 7 is a planar schematic view showing an insulation coating formed on a positive electrode plate and on a negative electrode plate according to another embodiment of the present disclosure; FIG. 8 is a planar schematic view showing an insulation coating formed on a positive electrode plate and on a negative electrode plate according to still another embodiment of the present disclosure; and FIG. 9 is a planar schematic view of an electrode assembly according to an embodiment of the present disclosure, showing the width dimensions of each portion.

In this specification, the term "non-coated part 62" refers to an area in which an active material layer is not formed, leaving a metal foil exposed, and the term "coated part 61" refers to an area, excluding the non-coated part 62, where an active material layer is formed.

Specifically, reference numerals 11 and 21 denote the non-coated regions for external connection, which are protruded or secured by notching in a positive electrode plate 10 and a negative electrode plate 20, respectively, for electrical connection with an external terminal or lead (e.g., welding, bonding, etc.). The regions 11 and 21 are considered part of the non-coated part 62 and are hereinafter referred to as the "positive electrode external-connection non-coated part 11" and the "negative electrode external-connection non-coated part 21", respectively.

In addition, the region denoted by the reference symbol T is a functional area where the external connection is actually made, referring to a partial area of the non-coated part 62 for external connection, hereinafter referred to as the "external-connection area T". The external-connection area T includes the positive electrode external-connection non-coated part 11 and/or the negative electrode external-connection non-coated part 21.

Furthermore, the electrode assembly and related configurations of the present disclosure are not limited to a specific cell form factor and may be equally applied to various battery structures, such as prismatic cells, pouch cells, and cylindrical cells. Accordingly, the embodiments of the present disclosure may be widely utilized regardless of the battery's shape, size, or form.

An electrode assembly according to an embodiment of the present disclosure is formed by sequentially stacking the positive electrode plate 10, a separator 30, and the negative electrode plate 20. The positive electrode plate 10 may include a first side region with the positive electrode external-connection non-coated part 11 for external connection, a predetermined portion of a second side region opposite to the first side region as the non-coated part 62 where an active material layer is absent, and the coated part 61 with an active material layer formed between the first and second side regions, excluding the non-coated part 62. The positive electrode plate 10 may also include a positive electrode insulation coating part 40a formed in the first side region of the positive electrode plate 10, extending from the boundary between the non-coated part 62 and the coated part 61 toward the end of the first side region of the positive electrode plate 10.

The positive electrode plate 10 includes: the first side region in which the external-connection area T is located; the non-coated part 62, which is a predetermined portion of a second side region opposite to the first side region; and the coated part 61, which is an active material layer region formed in a portion between the first side region and the second side region, excluding the non-coated part 62.

In addition, the first side region of the positive electrode plate 10 may include the positive electrode insulation coating part 40a formed to extend from the boundary between the non-coated part 62 and the coated part 61 toward the end of the first side region of the positive electrode plate 10. If necessary, the positive electrode plate may further include a positive electrode insulation coating part 40a extending from the boundary between the non-coated part 62 and the coated part 61 toward the end of the second side region, for the same purpose.

The electrode assembly according to an embodiment of the present disclosure may be formed using a stacking method as shown in FIG. 1, and although not shown, the present disclosure is also applicable to a conventional winding-type (jelly-roll) electrode assembly.

To be specific, the positive electrode plate 10 and the negative electrode plate 20 are alternately arranged, and the separator 30 for electrical insulation between the positive and negative electrode plates 10 and 20 is interposed and stacked therebetween. As shown in FIG. 1, the separator 30 may be stacked in a zigzag configuration, such that the positive electrode plate 10 and the negative electrode plate 20 are alternately stacked between adjacent separators 30.

In this case, the positive and negative electrode plates 10 and 20 may be welded or coupled to external connection members at their respective external-connection areas T for electrical connection to an external circuit. The external-connection area T is a partial area of the non-coated part 62 in which no active material layer is formed. To provide the external-connection area, the positive and negative electrode plates 10 and 20 may be notched to form a protruding or opening-shaped non-coated part, which are shown by reference numerals 11 and 21.

As shown in FIG. 2, based on the arrow direction, the left drawing illustrates a notching line 50 for a notching process of a conventional positive electrode plate 10, and the right drawing illustrates a notching line 50 for forming an external-connection area T in the positive electrode plate 10 according to an embodiment of the present disclosure.

The positive electrode plate 10 may include the coated part 61 on which an active material layer is coated, and the non-coated part 62 formed in a region excluding the coated part 61. In the illustrated example, the non-coated part 62 may be disposed at each of the opposite side regions of the positive electrode plate 10.

Because the non-coated part 62 is a portion in which a conductive metal foil is exposed, in case that this part is exposed outside the separator 30 or in case that the spacing from an opposing electrode is reduced due to shrinkage or deformation of the separator 30 after stacking, the non-coated part 62 may come into direct or effective contact with the negative electrode plate 20 on the opposite side of the separator 30, resulting in a potential electrical short circuit.

For this reason, in conventional technology, to prevent exposure of the non-coated part 62, the external-connection area has been notched more broadly to include a portion of the coated part 61, rather than precisely along the boundary between the non-coated part 62 and the coated part 61. In other words, due to the practical difficulty of maintaining exact boundary alignment without process deviations, a portion of the coated part is sacrificed to reduce the risk of residual or exposed non-coated part.

However, such excessive notching causes a loss of the active material layer formed in the coated part 61, resulting in a reduction of the effective active material mass of the positive electrode plate 10, which in turn leads to a decrease in the energy density of the electrode assembly and the secondary battery as a whole.

The same issue arises not only in the first side region where the external-connection area is formed, but also in the non-coated part 62 formed in the opposite second side region. In the second side region, when performing the notching process at the boundary between the coated part 61 and the non-coated part 62, a portion of the coated part has to be additionally notched to avoid exposure of the non-coated part, leading to loss of active material and reduced energy density, which is a structural limitation of the conventional approach.

In the present disclosure, the first side region and the second side region of the positive electrode plate 10 are defined with reference to FIG. 3. The side in which the external-connection area T and the positive electrode external-connection non-coated part 11 for forming the external-connection area T are located is referred to as the first side region of the positive electrode plate 10, and the region in the opposite direction is referred to as the second side region.

For the negative electrode plate 20, the first and second side regions are defined based on the same criteria as for the positive electrode plate 10. That is, the region corresponding to the first side region of the positive electrode plate 10 is referred to as the first side region of the negative electrode plate 20, and the region corresponding to the second side region of the positive electrode plate 10 is referred to as the second side region of the negative electrode plate 20.

For the separator 30 as well, the directions corresponding to the first and second side regions of the positive electrode plate 10 are respectively defined as the first side direction and the second side direction of the separator 30.

In an embodiment of the present disclosure, to prevent the risk of electrical short circuits due to exposure of the non-coated part 62 and to maximize the use of the active material in the coated part 61, the positive electrode insulation coating part 40a may be formed on the non-coated part 62 based on the boundary between the non-coated part 62 and the coated part 61.

The positive electrode insulation coating part 40a may be formed on each surface of the positive electrode plate 10, and serves to prevent, in advance, electrical short circuits with the opposing electrode (negative electrode plate 20) across the separator 30 in the stacked configuration. Even with partial shrinkage or positional changes of the separator 30, the insulation layer covering the surface of the non-coated part 62 effectively prevents direct contact with the negative electrode plate 20, substantially eliminating the risk of short circuits. As a result, the need for excessive notching of the coated part, as in the conventional case to avoid exposure of the non-coated part, is reduced, minimizing active material loss in the coated part 61.

As shown in FIG. 3, the positive electrode insulation coating part 40a may also be formed in the second side region of the positive electrode plate 10, extending from the boundary between the non-coated part 62 and the coated part 61 toward the end of the second side region. This prevents electrical risks from exposure of the non-coated part 62 and maximizes the utilization of active material in the coated part 61, both in the first side region with the external-connection area T and in the second side region with no external-connection area.

The positive electrode insulation coating part 40a provided in the first and second side regions of the positive electrode plate 10 may be formed so as to cover the boundary between the non-coated part 62 and the coated part 61, including portions of both the non-coated part 62 and the coated part 61. By completely covering the boundary with the insulation coating part, exposure of the non-coated part 62 near the boundary may be prevented despite notching deviations or coating position errors.

In addition, in the first side region of the positive electrode plate 10, the positive electrode insulation coating part 40a may be formed to extend from the boundary between the non-coated part 62 and the coated part 61 to the end of the non-coated part 62 in the first direction. In other words, the positive electrode insulation coating part 40a may be formed to substantially cover the entire non-coated region on the first side.

Even in this case, the minimum portion of the metal foil required for actual external connection within the external-connection area T may be excluded from the coating.

Similarly, in the second side region, the positive electrode insulation coating part 40a may extend from the boundary to the end of the non-coated part, substantially covering the entire non-coated region on the second side.

As shown in FIG. 3, the positive electrode insulation coating part 40a in the first side region extends from the boundary between the non-coated part 62 and the coated part 61 toward the first-side end with a width denoted as A, whereas in the second side region, the positive electrode insulation coating part 40a extends toward the second-side end with a width denoted as B. The widths A and B may be suitably designed to prevent exposure of the non-coated part and to avoid interference with the external-connection structure.

At this time, the width of the positive electrode insulation coating part 40a in the second side region may be adjusted so as not to exceed an end X of the stacked separator 30 in the second side direction, that is, to terminate inward of the second-side end of the separator. This prevents physical interference with the external-connection structure in the second side direction of the negative electrode plate 20 stacked on the opposite side of the separator 30 (e.g., the area where 21 is located), which could otherwise reduce the electrical connection reliability between the negative electrode plate 20 and the external-connection structure or restrict the design freedom for the negative electrode plate's connection structure.

As shown in FIG. 4, the positive electrode insulation coating part 40a in the first side region may extend in the first side direction up to the end of the separator 30 in the first side direction. In this case, the end of the positive electrode insulation coating part 40a formed in the first side region of the positive electrode plate 10 may extend farther toward the first-side end of the separator 30 than the end of the negative electrode plate 20 stacked opposite on the separator 30 in the first side region.

In addition, variations are also possible in which the positive electrode insulation coating part 40a extends beyond the first-side end of the separator 30, depending on factors such as subsequent process conditions, the length of the external-connection member, and the width of the external-connection area T.

As shown in FIGS. 3 and 4, the negative electrode plate 20 is provided with the negative electrode external-connection non-coated part 21 in the second side direction for electrical connection to an external terminal or lead. The end of the positive electrode insulation coating part 40a in the first side direction of the positive electrode plate 10 may extend farther toward the first-side end of the separator 30 than the end of the opposing negative electrode plate 20 on the separator 30. By extending the positive electrode insulation coating part 40a farther toward the end of the separator 30 than the first-side end of the negative electrode plate 20, which is positioned inward from the separator's first-side end, the end profile of the stack formed by the positive and negative electrode plates 10 and 20 on the separator 30 may be made flatter.

Such improvement in flatness may reduce the formation of unnecessary space during stacking, thereby increasing energy density. Furthermore, in the event of pouch edge damage during degassing or related processes, since the positive or negative electrode insulation coating part rather than the negative active material may be damaged, safety issues caused by loss of negative active material may also be mitigated.

Likewise, in the second side direction, by forming the end of the positive electrode insulation coating part 40a in the second side region of the positive electrode plate 10 to extend toward the second-side end of the separator beyond the end of the negative electrode plate 20, the stack flatness at the second-side end on the separator may be improved. Depending on design conditions, as illustrated in the modified example of FIG. 5, it is also possible to form the end of the positive electrode insulation coating part 40a to terminate inward of the second-side end of the separator, while the end of the negative electrode plate 20 extends farther outward. In this case, the length of the positive electrode insulation coating part 40a may be appropriately adjusted, taking into account the area and length of the negative electrode plate 20 in the second side direction, to prevent interference with the negative electrode external-connection non-coated part 21 and the external-connection area T.

In addition, as shown in FIG. 4, by forming the positive electrode insulation coating part 40a extending toward opposite ends of the positive electrode plate 10, a spacing c or d required for insulation from the first-side end of the separator 30 may be minimized. As a result, potential electrical issues from physical contact between the positive and negative electrode plates due to separator shrinkage are prevented by the insulation coatings, enabling maximal use of the effective stacking area of the positive and negative electrode plates 10 and 20 on the separator 30 and enhancing energy density.

FIG. 6 is a planar schematic view of a negative electrode plate stacked on a separator according to another embodiment of the present disclosure; FIG. 7 is a planar schematic view showing an insulation coating formed on a positive electrode plate and on a negative electrode plate according to another embodiment of the present disclosure; and FIG. 8 is a planar schematic view showing an insulation coating formed on a positive electrode plate and on a negative electrode plate according to another embodiment of the present disclosure.

The positive electrode plate 10 may have the external-connection area T in the first side region and the non-coated part 62 in the second side region, with the coated part 61 disposed therebetween. The positive electrode plate 10 may further include the positive electrode insulation coating part 40a in both the first side and second side regions, each extending from the boundary between the non-coated part 62 and the coated part 61 toward the end in each direction.

The negative electrode plate 20 may have the external-connection area T in the second side region, the non-coated part 62 in a predetermined portion of the opposite first side region, and the coated part 61 disposed therebetween. The negative electrode plate 20 may further include a negative electrode insulation coating part 40b in both the first side and second side regions, each extending from the boundary between the non-coated part 62 and the coated part 61 toward the end in each direction.

Another embodiment of the present disclosure describes an example in which insulation coating parts 40a and 40b are formed on both the positive electrode plate 10 and the negative electrode plate 20.

An electrode assembly according to another embodiment of the present disclosure is formed by sequentially stacking a positive electrode plate 10, a separator 30, and a negative electrode plate 20. The positive electrode plate 10 may include a first side region with a positive electrode external-connection non-coated part 11 for electrical connection to an external terminal or lead, a predetermined portion of a second side region opposite to the first side region as a non-coated part 62 where an active material layer is absent, and a coated part 61 with an active material layer formed between the first and second side regions, excluding the non-coated part 62. The positive electrode plate 10 may further include a positive electrode insulation coating part 40a formed in the first side region of the positive electrode plate 10, extending from the boundary between the non-coated part 62 and the coated part 61 toward the end of the first side region of the positive electrode plate 10.

In addition, the negative electrode plate 20 may include a second side region with a negative electrode external-connection non-coated part 21 for electrical connection to an external terminal or lead, a predetermined portion of a first side region opposite to the second side region as a non-coated part 62 where an active material layer is absent, and a coated part 61 with an active material layer formed between the first and second side regions, excluding the non-coated part 62. The negative electrode plate 20 may further include a negative electrode insulation coating part 40b in both the first side and second side regions, each extending from the boundary between the non-coated part 62 and the coated part 61 toward the end in each direction.

As shown in FIG. 6, negative electrode insulation coating parts 40b having predetermined widths A' and B' may be respectively formed in the second side region (toward the external-connection area) and the first side region (opposite direction) of the negative electrode plate 20. The negative electrode insulation coating part 40b may also be formed to extend from the boundary between the non-coated part 62 and the coated part 61 toward the non-coated part. In the second side region, the coating part may extend from the boundary to the end of the non-coated part so as to cover the entire non-coated part.

In this case, the width A' of the negative electrode insulation coating parts 40b provided in the second side direction of the negative electrode plate 20 may be formed to be less than the sum of half (1/2) of a thickness T1 of the final stacked body formed by stacking the positive electrode plate 10, the separator 30, and the negative electrode plate 20, and a distance Y' from the end of the positive electrode plate 10 to the second-side end of the separator 30. There is no particular lower limit for the width A' of the negative electrode insulation coating parts 40b, and the width A' may be formed within a range where the physical width is greater than zero.

To be specific, when the length of the negative electrode insulation coating part 40b extending in the second side direction of the negative electrode plate 20 from the boundary between the coated part and the non-coated part in the second side direction is defined as A', the distance from the end of the coated part in the second side direction of the negative electrode plate 20 to the second-side end of the positive electrode plate 10 stacked facing the negative electrode plate 20 on the separator 30 is defined as X', the distance from the second-side end of the positive electrode plate 10 to the second-side end of the separator 30 is defined as Y', and the final thickness of the stacked body in which the positive electrode plate 10, the separator 30, and the negative electrode plate 20 are alternately stacked is defined as T1, the following equation is satisfied.

[Equation 1]

$$A' \leq T1/2 + X' + Y'$$

In this way, physical interference from the negative electrode insulation coating part 40b during tab welding in the final stacked body may be avoided, thereby improving the reliability of the secondary battery manufacturing process.

In the first side region as well, the negative electrode insulation coating part 40b may extend from the boundary to the end of the first side non-coated region. However, it is appropriate to form the negative electrode insulation coating part 40b so that the negative electrode insulation coating part 40b ends inwardly without exceeding the end of the corresponding positive electrode insulation coating part 40a on the opposite side of the separator 30. This is because if the negative electrode insulation coating part 40b physically contacts the first side external-connection structure of the positive electrode plate 10 stacked opposite the separator 30 (e.g., the area where 11 is located), the external-connection reliability of the positive electrode plate 10 may be reduced.

As shown in FIG. 7, the end of the negative electrode insulation coating part 40b in the first side region of the negative electrode plate 20 may be equal to or extend farther in the first side direction toward the end X of the separator 30 than the end of the positive electrode insulation coating part 40a of the facing positive electrode plate 10. In this case, while the negative electrode insulation coating part 40b may extend from the boundary to the end of the first side non-coated part, it is appropriate to form the negative electrode insulation coating part 40b such that the negative electrode insulation coating part 40b terminates inwardly without exceeding the first-side end X of the separator 30.

In the second-side region, the end of the negative electrode insulation coating part 40b may be equal to or extend farther, in the second-side direction toward the end of the separator, than the end of the positive electrode insulation coating part 40a.

By mutually adjusting the end lengths of the positive electrode insulation coating part 40a and the negative electrode insulation coating part 40b, it is possible to improve the end flatness of the stacked body when stacked on the separator 30, even if there are differences in the coated part designs and stacking specifications of the positive electrode plate 10 and the negative electrode plate 20. In addition, by adjusting the distance between the ends of the positive and negative electrode insulation coating parts 40a and 40b and the end of the separator, the overall design freedom of the electrode assembly may be increased.

In a structure in which insulation coating parts 40a and 40b are formed, respectively, on both the facing positive electrode plate and negative electrode plate, insulation layers are formed at both end surfaces of the separator 30, thereby reducing bending or end deformation of the stacked body itself. As a result, the reliability of the secondary battery manufacturing process is improved, and this structure may also be advantageous for securing the energy density of the final cell.

As shown in FIG. 8, the positive electrode insulation coating part 40a may be formed to extend longer at the first side region of the positive electrode plate 10 than the end of the negative electrode insulation coating part 40b of the negative electrode plate 20 corresponding thereto across the separator 30. Similarly, in the second side region of the positive electrode plate 10, the length of the positive electrode insulation coating part 40a in the direction toward the separator 30 end may be formed to extend longer than the length of the negative electrode insulation coating part 40b in the direction toward the separator end. Substantially, by extending the insulation coating part of the positive electrode plate 10 longer in both end directions, a larger effective energy area of the positive electrode plate may be secured.

FIG. 9 is a planar schematic view of an electrode assembly according to another embodiment of the present disclosure, and is a schematic view illustrating the relationship between the length (width) design of the insulation coating part and the electrode end spacing and the thickness of the stacked body.

As shown in FIG. 9, the positive electrode plate 10 includes the external-connection area T disposed in the first side region, the non-coated part 62 formed in a predetermined portion of the second side region, and the coated part 61 formed therebetween. In the first side region, the positive electrode insulation coating part 40a may be formed to extend toward the external-connection area T, including the boundary between the non-coated part and the coated part.

The negative electrode plate 20 may be configured such that a non-coated part 62 is formed in the second side region, and the external-connection area T is defined as a partial area of the non-coated part 62, while the remaining regions are formed as the coated part 61.

The insulation coating part may be formed in each of the first and second side regions of the positive electrode plate 10, and may be formed to overlap so as to cover the boundary between the coated part 61 and the non-coated part 62 in each region. To be specific, it is preferable that the longitudinal width of the positive electrode insulation coating part 40a overlapping the coated part 61 is designed to simultaneously satisfy complete coverage of the non-coated part 62 and optimization of overlap with the coated part 61.

As shown in FIG. 9, when the length of the positive electrode insulation coating part 40a extending in the first side direction from the boundary (excluding the overlapping portion) between the coated part 61 and the non-coated part 62 in the first side direction of the positive electrode plate 10 is defined as A2, the distance from the end of the coated part 61 of the positive electrode plate 10 in the first side direction to the end of the negative electrode plate 20 stacked facing the positive electrode plate 10 on the separator 30 is defined as X1, the distance from the first-side end of the negative electrode plate 20 to the first-side end of the separator 30 is defined as Y1, and the final stacked-body thickness of the electrode assembly in which the positive electrode plate 10, the separator 30, and the negative electrode plate 20 are alternately stacked is defined as T1, A2 may be set to satisfy the following relationship.

[Equation 2]

$$X1 \leq A2 \leq T1/2 + X1 + Y1$$

That is, A2 needs to be at least equal to or greater than X1 so that the insulation coating part sufficiently covers the section where the non-coated part 62 of the positive electrode plate 10 directly faces the end of the negative electrode plate 20 stacked on the separator 30, thereby ensuring electrical safety.

Meanwhile, during the process of performing external connection operations, such as tab welding, on the external-connection area T after the positive electrode plate 10, the separator 30, and the negative electrode plate 20 are stacked, an excessively wide positive electrode insulation coating part 40a may physically interfere with the external connection process. Moreover, if the inactive area becomes excessively large, internal resistance may increase, potentially causing heat generation and a decrease in output. To prevent this, the upper limit condition A2 ≤ T1/2 + X1 + Y1 is imposed, thereby balancing insulation safety, manufacturability, and electrical performance.

According to the electrode assembly of the present disclosure as described above, in order to reduce the risk of short-circuiting due to exposure of the non-coated part 62, insulation coating parts 40a and 40b are formed on the non-coated part 62 of the positive electrode plate 10 and, optionally, on the non-coated part 62 of the negative electrode plate 20. This effectively prevents direct contact between the non-coated part and the opposing electrode even in the presence of shrinkage or positional deviations of the separator 30, thereby significantly reducing the risk of electrical short circuits.

In addition, unlike conventional designs where portions of the coated part 61 have to be excessively notched to prevent exposure of the non-coated part, the approach of the present disclosure allows the active material layer of the coated part to be preserved intact, thereby enhancing the energy density of the electrode assembly and the secondary battery.

Furthermore, by appropriately adjusting the end positions of the insulation coating parts 40a and 40b in both end directions of the positive electrode plate 10 and the negative electrode plate 20 relative to the ends of the separator 30 and the opposing electrode, the flatness of the stacked body formed on the separator 30 may be improved, and unnecessary space during stacking may be minimized.

By designing the length A2 of the insulation coating part around the external-connection area T in relation to the stacked-body thickness T1 and the electrode end spacings X1 and Y1, physical interference of the insulation coating part during welding or lead attachment processes may be prevented, thereby ensuring the electrical reliability of the external connection. By defining the distance relationships between the positive and negative electrode insulation coating parts 40a and 40b, the ends of the separator 30, and the ends of the electrode coated parts in mathematical terms, the design may be applied to electrode assemblies of various sizes, shapes, and stacking specifications, thereby significantly enhancing the design freedom for high-energy-density and high-reliability secondary batteries.

Above, the present disclosure has been described in detail through specific embodiments. The embodiments are for specifically explaining the present disclosure, and are only illustrative and do not limit the scope of the appended claims. It is obvious to those skilled in the art that various changes and modifications to the embodiments are possible within the scope and technical idea of the present disclosure, and it is natural that such changes and modifications fall within the scope of the appended claims.

**Claims**

1.  An electrode assembly comprising:

    a positive electrode plate, a separator, and a negative electrode plate sequentially stacked, wherein the positive electrode plate comprises:

      a first side region provided with a positive electrode external-connection non-coated part for electrical connection to an external terminal or lead;
      a non-coated part in a predetermined portion of a second side region, opposite to the first side region, where an active material layer is not formed;
      a coated part between the first and second side regions, where an active material layer is formed except for the non-coated part; and
      a positive electrode insulation coating part formed in the first side region of the positive electrode plate, extending from a boundary between the non-coated part and the coated part toward an end of the first side region of the positive electrode plate.

2.  The assembly of claim 1, wherein the positive electrode insulation coating part is formed to extend from the boundary between the non-coated part and the coated part in the second side region of the positive electrode plate toward an end of the second side region of the positive electrode plate.

3.  The assembly of claim 1 or 2, wherein the positive electrode insulation coating part is formed on the first side region of the positive electrode plate so as to cover the boundary between the non-coated part and the coated part, including a portion of the non-coated part and a portion of the coated part simultaneously.

4.  The assembly of any one of claims 1 to 3, wherein the positive electrode insulation coating part is formed on the first side region of the positive electrode plate so as to extend from the boundary between the non-coated part and the coated part toward an end of the non-coated part in a first side direction of the positive electrode plate.

5.  The assembly of claim 2, wherein the positive electrode insulation coating part is formed on the second side region of the positive electrode plate so as to cover the boundary between the non-coated part and the coated part, including a portion of the non-coated part and a portion of the coated part simultaneously.

6.  The assembly of claim 2 or 5, wherein the positive electrode insulation coating part is formed on the second side region of the positive electrode plate so as to extend from the boundary between the non-coated part and the coated part toward an end of the non-coated part in a second side direction of the positive electrode plate.

7.  The assembly of any one of claims 1 to 6, wherein in a second side region of the negative electrode plate, a negative electrode external-connection non-coated part is formed for electrical connection to an external terminal or lead, and
an end of the positive electrode insulation coating part provided in the first side region of the positive electrode plate is formed to extend farther toward a first-side end of the separator than an end, in a first side direction, of the negative electrode plate stacked facing the positive electrode plate on the separator.

8. The assembly of any one of claims 2, 5, or 6, wherein in a second side region of the negative electrode plate, a negative electrode external-connection non-coated part is formed for electrical connection to an external terminal or lead, and
an end of the positive electrode insulation coating part provided in a second side direction of the positive electrode plate is formed shorter than a second-side end of the separator.

9. The assembly of claim 6, wherein an end of the positive electrode insulation coating part provided on the second side region of the positive electrode plate is formed inward of a second-side end of the separator.

10. An electrode assembly comprising:

a positive electrode plate, a separator, and a negative electrode plate sequentially stacked, wherein the positive electrode plate comprises: a first side region provided with a positive electrode external-connection non-coated part for electrical connection to an external terminal or lead; a non-coated part in a predetermined portion of a second side region, opposite to the first side region, where an active material layer is not formed; a coated part between the first and second side regions, where an active material layer is formed except for the non-coated part; and a positive electrode insulation coating part formed in the first side region of the positive electrode plate, extending from a boundary between the non-coated part and the coated part toward an end of the first side region of the positive electrode plate, whereas
the negative electrode plate comprises: a second side region provided with a negative electrode external-connection non-coated part for electrical connection to an external terminal or lead; a non-coated part in a predetermined portion of a first side region, opposite to the second side region, where an active material layer is not formed; a coated part between the first and second side regions, where an active material layer is formed except for the non-coated part;

and a negative electrode insulation coating part formed in each of the first and second side regions of the negative electrode plate, each extending from a boundary between the non-coated part and the coated part toward an end in each direction.

11. The assembly of claim 10, wherein an end of the negative electrode insulation coating part in a first side direction of the negative electrode plate is formed to be equal to or longer than an end of the positive electrode insulation coating part formed in a first side direction of the positive electrode plate stacked facing the negative electrode plate on the separator.

12. The assembly of claim 10 or 11, wherein the positive electrode plate further comprises a positive electrode insulation coating part formed in the second side region of the positive electrode plate, extending from the boundary between the non-coated part and the coated part toward an end of the second side region of the positive electrode plate,
wherein an end of the negative electrode insulation coating part in a second side direction of the negative electrode plate is formed to extend farther than an end of the positive electrode insulation coating part in a second side direction of the positive electrode plate stacked facing the negative electrode plate on the separator.

13. The assembly of any one of claims 10 to 12, wherein an end of the negative electrode insulation coating part in a first side direction of the negative electrode plate is formed inward of a first-side end of the separator.

14. The assembly of any one of claims 10 to 13, wherein in the first side region of the positive electrode plate, the positive electrode insulation coating part is formed to extend farther than an end of the negative electrode insulation coating part of the negative electrode plate corresponding thereto across the separator, and
in the second side region of the positive electrode plate, a length of the positive electrode insulation coating part in a direction toward an end of the separator is formed to extend longer than a length of the negative electrode insulation coating part in a direction toward the end of the separator.

15. The assembly of any one of claims 1 to 7, wherein when a length of the positive electrode insulation coating part extending in a first side direction of the positive electrode plate from the boundary between the coated part and the non-coated part is defined as A2, a distance from a first-side end of the coated part of the positive electrode plate to a first-side end of the negative electrode plate stacked facing the positive electrode plate on the separator is defined as X1, a distance from the first-side end of the negative electrode plate to a first-side end of the separator is defined as Y1, and a final thickness of a stacked body in which the positive electrode plate, the separator, and the negative electrode plate are alternately stacked is defined as T1, an equation $X1 \leq A2 \leq T1/2+X1+Y1$ is satisfied.

16. The assembly of any one of claims 10 to 14,, wherein when a length of the negative electrode insulation coating part extending in a second side direction of the negative electrode plate from the boundary between the coated part and the non-coated part toward the second side direction is defined as A', a distance from an end of the coated part in the second side direction of the negative electrode plate to a second-side end of the positive electrode plate stacked facing the negative electrode plate on the separator is defined as X', a distance from the second-side end of the positive electrode plate to a second-side end of the separator is defined as Y', and a final thickness of a stacked body in which the positive electrode plate, the separator, and the negative electrode plate are alternately stacked is defined as T1, an equation $A' \leq T1/2+X'+Y'$ is satisfied.

17. The assembly of any one of claims 1 to 7, or claim 15, wherein the positive electrode insulation coating part is formed so as to extend toward an end of the first side region of the positive electrode plate, except for a non-coated part region for electrical connection to an external terminal or lead.

**FIG. 1**

**FIG. 2**

**FIG. 3**

**FIG. 4**

**FIG. 5**

**FIG. 6**

**FIG. 7**

**FIG. 8**

**FIG. 9**

# EUROPEAN SEARCH REPORT

**Application Number**

EP 25 22 7119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2024/266700 A1 (LEE KWAN-HEE [KR] ET AL) 8 August 2024 (2024-08-08)<br>* abstract; figures 1-12 *<br>* paragraph [0008] - paragraphs [0010], [0040] *<br>* paragraph [0055] - paragraph [0062] *<br>* paragraph [0077] - paragraph [0086] *<br>* paragraph [0115] - paragraphs [0120], [0130] *<br>----- | 1-17 | INV.<br>H01M50/586<br>H01M10/04 |
| Y | KR 101 062 681 B1 (LG CHEMICAL LTD [KR]) 6 September 2011 (2011-09-06)<br>* the whole document *<br>----- | 1-17 | |
| A | KR 2011 0007524 A (SAMSUNG SDI CO LTD [KR]) 24 January 2011 (2011-01-24)<br>* the whole document *<br>----- | 1-17 | |

**TECHNICAL FIELDS SEARCHED (IPC)**

H01M

The present search report has been drawn up for all claims

| Place of search | Date of completion of the search | Examiner |
|---|---|---|
| The Hague | 22 May 2026 | Fiorenzo Catalano, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 7119

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2026

| Patent document cited in search report | Publication date | Patent family member(s) | | Publication date |
|---|---|---|---|---|
| US 2024266700 A1 | 08-08-2024 | CN | 115706267 A | 17-02-2023 |
| | | CN | 219106242 U | 30-05-2023 |
| | | EP | 4329026 A1 | 28-02-2024 |
| | | JP | 2024514896 A | 03-04-2024 |
| | | JP | 2026081270 A | 18-05-2026 |
| | | US | 2024266700 A1 | 08-08-2024 |
| | | WO | 2023013933 A1 | 09-02-2023 |
| KR 101062681 B1 | 06-09-2011 | NONE | | |
| KR 20110007524 A | 24-01-2011 | CN | 101958427 A | 26-01-2011 |
| | | EP | 2276091 A1 | 19-01-2011 |
| | | JP | 5174841 B2 | 03-04-2013 |
| | | JP | 2011023334 A | 03-02-2011 |
| | | KR | 20110007524 A | 24-01-2011 |
| | | US | 2011014509 A1 | 20-01-2011 |

EPO FORM P0459

For more details about this annex : see Official Journal of the European Patent Office, No. 12/82

**REFERENCES CITED IN THE DESCRIPTION**

**Patent documents cited in the description**

- KR 1020240196100
- KR 1020250192715
- KR 1019970054735